# EUROPÄISCHE PATENTSCHRIFT

(11) **EP 2 097 770 B1**
(45) Veröffentlichungstag und Bekanntmachung des Hinweises auf die Patenterteilung: **15.09.2010**
(21) Anmeldenummer: 07858180.8
(22) Anmeldetag: 27.12.2007
(51) Int. Cl.: G01S 7/497, G05D 1/02

(54) **VERTIKALE AUSRICHTUNG EINES LIDAR-SENSORS**
VERTICAL ORIENTATION OF A LIDAR SENSOR
ALIGNEMENT VERTICAL D'UN CAPTEUR DE RADAR OPTIQUE

(30) Priorität: 04.01.2007 DE 102007001103
(43) Veröffentlichungstag der Anmeldung: 09.09.2009
(73) Patentinhaber: Continental Automotive GmbH, 30165 Hannover (DE)
(72) Erfinder: BAUER, Jochen, 88131 Lindau (DE); ERTL, Ludwig, 93077 Bad Abbach / Peising (DE)
(86) Internationale Anmeldenummer: PCT/EP2007/064584
(87) Internationale Veröffentlichungsnummer: WO 2008/080951

(56) Entgegenhaltungen:
- WO-A-00/75686
- WO-A-01/79879
- DE-A1- 10 316 101
- DE-C1- 19 650 863
- US-A1- 2003 093 220

## Beschreibung

Die Erfindung betrifft eine Auswerteeinheit für ein Fahrerassistenzsystem für ein Fahrzeug mit einem Eingang zum Empfangen von Bildinformationen, welche von einer Kamera erfasst wurden.

Unter dem Begriff der Fahrerassistenzsysteme (englisch: ADAS, Advanced Driver Assistance Systems) werden Funktionen zusammengefasst, welche der Unterstützung des Fahrers eines Kraftfahrzeuges dienen. Ziel der Fahrerassistenzsysteme ist häufig die Steigerung der Sicherheit durch die Vermeidung von Gefahrensituationen vor deren Entstehung und durch die Unterstützung des Fahrers zur Unfallvermeidung in kritischen Situationen. Weitere Ziele sind die Steigerung des Komforts durch Stressreduktion und Entlastung des Fahrers in Standardsituationen, die Erleichterung der Orientierung durch situationsabhängig aufbereitete und fahrergerecht vermittelte Umfeld-Informationen, sowie die Erhöhung des Fahrspaßes.

Beispiele für Fahrerassistenzfunktionen sind die Antriebsschlupfregelung bzw. Traktionskontrolle wie ABS (Antiblockiersystem), ASR (Antriebs-Schlupf-Regelung), ESP (Elektronisches Stabilitätsprogramm), EDS (Elektronische Differentialsperre), sowie adaptives Kurvenlicht, Auf- und Abblendassistent für das Fahrlicht, Nachtsichtsysteme (englisch: night vision), Tempomat, Einparkhilfe, Bremsassistent, ACC (Adaptive Cruise Control) bzw. Abstandsregeltempomat, Abstandswarner, Abbiegeassistent, Stauassistent, Spurerkennungssystem, Spurhalteassistent, Spurhalteunterstützung, Spurwechselassistent, ISA (Intelligent Speed Adaption), ANB (Automatische Notbremsung), Reifendruckkontrollsystem, Fahrerzustandserkennung, Verkehrszeichenerkennung, Platooning.

Im Stand der Technik sind adaptive Fahrregelungssysteme (ACC) bekannt. Als Abstandssensorik wird in der Regel Radar oder Lidar eingesetzt.

In DE 103 16 101 A1 wird ein Verfahren und eine Vorrichtung zur Erfassung des Fahrzeugabstands beschrieben, bei dem eine Kamera und ein Radar mit einstellbarem Scanwinkel eingesetzt werden. Aus dem von der Kamera aufgenommenen Straßenbild werden Fahrbahnmarkierungen extrahiert und daraus die Neigung der Straße berechnet. Der Scanwinkel des Radars wird auf Grundlage der berechneten Neigung der Straße eingestellt.

In WO 00/75686 A1 wird ein Verfahren beschrieben, mittels dessen der Neigungswinkel eines Fahrzeugs bei Messungen kompensiert wird mit Hilfe eines am Fahrzeug montierten Radarsystems. Hierzu wird mittels Radarstrahlen, die von vorausbefindlichen Objekten zurückgeworfen werden, der Neigungswinkel des Fahrzeugs bestimmt, um diesen bei anschließenden Radarmessungen, beispielweise zur Kollisionswarnung oder Geschwindigkeitskontrolle, zu berücksichtigen.

Der Erfindung liegt die Aufgabe zugrunde, eine effiziente Auswerteeinheit für ein Fahrerassistenzsystem, sowie ein entsprechendes Computerprogrammprodukt und ein Verfahren zum Betreiben eines Fahrerassistenzsystems aufzuzeigen.

Diese Aufgabe wird durch eine Auswerteeinheit mit den Merkmalen des Anspruchs 1, sowie durch ein Computerprogrammprodukt und ein Verfahren mit Merkmalen von nebengeordneten Ansprüchen gelöst. Vorteilhafte Ausgestaltungen und Weiterbildungen sind Gegenstand von Unteransprüchen.

Die erfindungsgemäße Auswerteeinheit für ein Fahrerassistenzsystem für ein Fahrzeug weist einen Eingang auf zum Empfangen von von einer Kamera erfassten Bildinformationen, sowie Ermittlungs-Mittel zum Ermitteln zumindest einer einen Neigungswinkel des Fahrzeugs beschreibenden Größe unter Verwendung der Bildinformationen. Weiterhin sind Bestimmungs-Mittel vorhanden zum Bestimmen eines Ausgabesignals unter Verwendung der zumindest einen Größe, wobei das Ausgabesignal eine vertikale Ausrichtung von von einer Sendeeinheit auszustrahlender elektromagnetischer Strahlung betrifft, und ein Ausgang zum Ausgeben des Ausgabesignals.

Von der Auswerteeinheit wird aus Bildinformationen eine oder mehrere Größen ermittelt, welche einen Neigungswinkel des Fahrzeugs betreffen. Die Größe betreffend den Neigungswinkel wird somit aus einer Betrachtung des Umfeldes des Fahrzeugs gewonnen. Der Neigungswinkel bezieht sich auf eine Bezugsgröße, so z.B. auf die Fahrbahnebene oder auf die Neigung eines anderen Fahrzeugs. Vorzugsweise handelt es sich bei der durch die Größe beschriebene Neigung um eine Neigung des Fahrzeugs in vertikaler Richtung bzw. um eine Rotation parallel zur Querachse des Fahrzeugs und somit in derjenigen Dimension, in welcher die Sendeeinheit bzw. die von der Sendeeinheit auszustrahlende elektromagnetische Strahlung gemäß dem Ausgangssignal auszurichten ist.

Die den Neigungswinkel betreffende Größe oder Größen wird verwendet, um ein Ausgabesignal betreffend die vertikale Ausrichtung von von der Sendeinheit auszustrahlender elektromagnetischer Strahlung zu bestimmen. Hierbei ist es möglich, dass das Ausgabesignal ausschließlich aus der mindestens einen Neigungswinkel-Größe bestimmt wird, oder dass andere Größen in diese Bestimmung einfließen. Die vertikale Ausrichtung bezieht sich hierbei vorzugsweise auf das Bezugssystem des Fahrzeugs; eine Bewegung in vertikaler Richtung bedeutet in diesem Fall eine Bewegung senkrecht zur Ebene der Fahrbahnoberfläche. Eine derartige vertikale Ausrichtung wird vorzugsweise durch eine Rotation der Sendeeinheit parallel zur Querachse des Fahrzeugs bewirkt.

Das Ausgabesignal kann zur Steuerung der vertikalen Ausrichtung der elektromagnetischen Strahlung eingesetzt werden. Vorzugsweise sendet die Auswerteeinheit das Ausgabesignal dementsprechend an eine für die Steuerung oder Ausrichtung der Sendeeinheit zuständige Komponente, wie z.B. an einen Elektromotor. Nach Ausrichtung der Sendeeinheit entsprechend dem Ausgabesignal kann die Sendeeinheit in die jeweilige Richtung abstrahlen; alternativ hierzu ist es möglich, dass die Sendeinheit nicht abstrahlt, sondern lediglich zur Abstrahlung in die jeweilige Richtung ausgerichtet ist, so dass bei Bedarf eine Abstrahlung erfolgen kann.

In Weiterbildung der Erfindung sind die Ermittlungs-Mittel derart ausgestaltet, dass die zumindest eine Größe unter Verwendung von in den Bildinformationen abgebildeten Fahrbahnmarkierungen und/der Fahrbahnbegrenzungen ermittelt wird. Als Fahrbahnmarkierungen kommen hierbei Markierungen zur Abgrenzung verschiedener Fahrspuren voneinander in Betracht, oder Markierungen zur Anzeige des Fahrbahnrandes; als Fahrbahnbegrenzung kommt hierbei z.B. der Rand des Fahrbahnasphalts oder am Fahrbahnrand angeordnete Objekte wie Pfosten oder Leitplanken in Betracht. Vorzugsweise sind die Ermittlungs-Mittel derart ausgestaltet, dass unter Verwendung der abgebildeten Fahrbahnmarkierungen und/der Fahrbahnbegrenzungen ein Straßenverlauf ermittelt wird, und unter Verwendung des ermittelten Straßenverlaufs die zumindest eine Größe ermittelt wird. Der Straßenverlauf kann hierbei in Abhängigkeit vom Abstand vom Fahrzeug die vertikale und/oder horizontale Krümmung der Fahrbahn angeben.

Die Ermittlungs-Mittel sind derart ausgestaltet, dass die zumindest eine Größe unter Verwendung von einem anderen in den Bildinformationen abgebildeten Fahrzeug ermittelt wird. Dies erlaubt es, die Ausrichtung der von der Sendeeinheit auszustrahlenden elektromagnetischen Strahlung an das andere Fahrzeug anzupassen. Die zumindest eine Größe kann in diesem Fall einen Neigungswinkel des Fahrzeugs relativ zu dem anderen Fahrzeug umfassen. Weiterhin kann die zumindest eine Größe einen Neigungswinkel des Fahrzeugs relativ zu einer Verbindungslinie zwischen dem Fahrzeug und dem anderen Fahrzeug umfassen.

Einer Weiterbildung der Erfindung gemäß umfasst die zumindest eine Größe einen Nickwinkel des Fahrzeugs. Der Nickwinkel beschreibt hierbei eine Neigung des Fahrzeugs gegen seine Querachse, wobei die Querachse bei ebener Fahrbahn parallel zur Fahrbahnebene verläuft.

In Ausgestaltung der Erfindung ist die Sendeeinheit Bestandteil eines Systems zur Abstandsbestimmung, wie z.B. eines Lidar-Systems.

Die Ermittlungs-Mittel können derart ausgestaltet sein, dass die zumindest eine Größe unter Verwendung von von einem Neigungssensor erfassten Informationen ermittelt wird. In diesem Fall werden zusätzlich zu den Bildinformationen Messungen eines Neigungssensors berücksichtigt, wenn die zumindest eine Größe ermittelt wird.

Das erfindungsgemäße Fahrerassistenzsystem umfasst eine Auswerteeinheit, die Kamera und die Sendeeinheit für elektromagnetische Strahlung. Vorzugsweise sind weiterhin Mittel vorgesehen zum Bestimmen des Abstandes zu einem anderen Fahrzeug unter Verwendung der Sendeeinheit, sowie Mittel zum Regeln eines Abstandes zu dem anderen Fahrzeug, beispielsweise zum Einhalten eines konstanten Abstandes zu dem anderen Fahrzeug.

Das erfindungsgemäße Computerprogrammprodukt umfasst Ermittlungs-Mittel zum Ermitteln zumindest einer einen Neigungswinkel des Fahrzeugs beschreibenden Größe unter Verwendung von Bildinformationen, Bestimmungs-Mittel zum Bestimmen eines Ausgangssignals unter Verwendung der zumindest einen Größe, wobei das Ausgabesignal eine vertikale Ausrichtung von von einer Sendeeinheit auszustrahlender elektromagnetischer Strahlung betrifft, sowie Ausgabe-Mittel zum Ausgeben des Ausgangssignals. Unter einem Computerprogrammprodukt kann im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden werden.

Bei dem erfindungsgemäßen Verfahren werden von einer Kamera aufgenommene Bildinformationen empfangen, es wird zumindest eine einen Neigungswinkel des Fahrzeugs beschreibende Größe unter Verwendung der Bildinformationen ermittelt, und ein Ausgangssignal wird unter Verwendung der zumindest einen Größe bestimmt, wobei das Ausgabesignal eine vertikale Ausrichtung von von einer Sendeeinheit auszustrahlender elektromagnetischer Strahlung betrifft.

Das erfindungsgemäße Computerprogrammprodukt und das erfindungsgemäße Verfahren eignen sich insbesondere für die erfindungsgemäße Auswerteeinrichtung, wobei dies auch auf die Ausgestaltungen und Weiterbildungen zutreffen kann. Hierzu können sie weitere geeignete Mittel bzw. Schritte umfassen.

Im folgenden wird die Erfindung anhand eines Ausführungsbeispiels näher erläutert. Dabei zeigen:
- Figur 1:: zwei Fahrzeuge,
- Figur 2:: einen Ausschnitt aus einem Fahrerassistenzsystem eines Fahrzeugs,
- Figur 3:: ein Flussdiagramm.

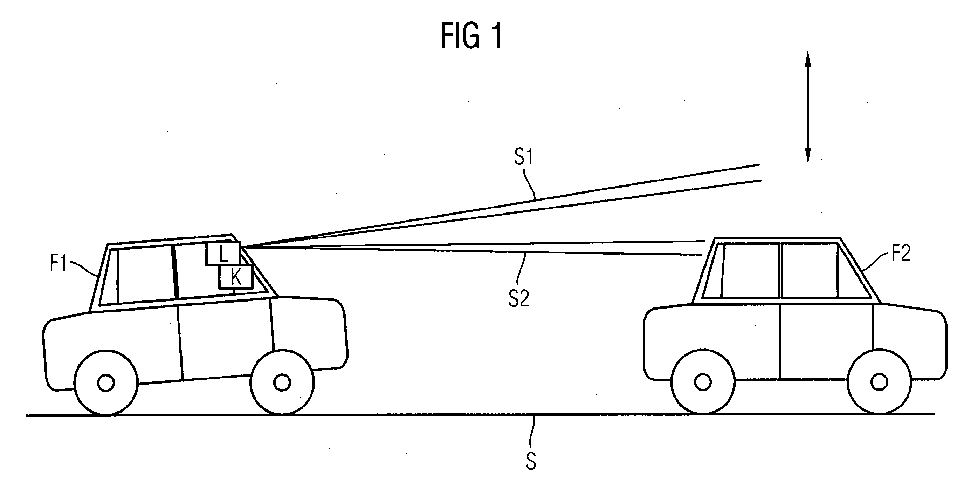

Figur 1 zeigt die beiden Fahrzeuge F1 und F2, welche sich hintereinander auf einer Straße S befinden. Das Fahrzeug F1 verfügt über ein Fahrerassistenzsystem mit der Fahrerassistenzfunktion ACC, welche den Abstand zum vorausfahrenden Fahrzeug F2 regeln soll. Zu diesem Zweck wird der Abstand zwischen den Fahrzeugen F1 und F2 von einem Lidar-Sensor L des Fahrzeugs F1 bestimmt. Der Lidar-Sensor L ist hierbei hinter der Windschutzscheibe des Fahrzeugs F1 befestigt; er sendet einen Laserstrahl in Vorwärtsrichtung aus und empfängt den vom Fahrzeug F2 reflektierten Laserstrahl. Es wird die Laufzeit zwischen der Versendung des Lasersignals und dem Empfang des reflektierten Lasersignals bestimmt, welche ein Maß für die Entfernung des Fahrzeugs F2 vom Fahrzeug F1 ist.

Figur 1 zeigt zwei Laserstrahlen S1 und S2 des Lidar-Sensors. L, welche sich hinsichtlich ihrer vertikalen Ausrichtung unterscheiden. Unter der vertikalen Ausrichtung wird hierbei die Ausrichtung senkrecht zur Oberfläche der Straße S verstanden, in Figur 1 durch einen Doppelpfeil angezeigt. Während der Laserstrahl S2 auf das Fahrzeug F2 trifft und somit eine Bestimmung des Abstandes zwischen den Fahrzeugen F1 und F2 ermöglicht, erfolgt die Abstrahlung des Strahls S1 so hoch in vertikaler Richtung, dass der Strahl S1 das Fahrzeug F2 nicht erreicht. Die vertikale Ausrichtung des Lidar-Sensors L ist somit von großer Bedeutung dafür, ob eine Abstandsbestimmung zu einem vorausfahrenden Fahrzeug möglich ist. Fehlausrichtungen des Lidar-Sensors L gewinnen insbesondere mit steigender Entfernung zum voranfahrenden Fahrzeug F2 an Bedeutung.

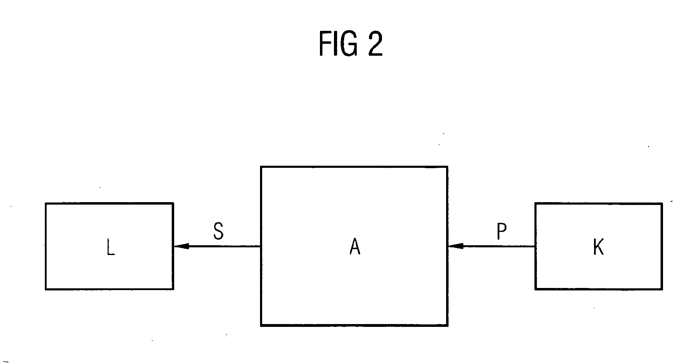

Das Fahrerassistenzsystem des Fahrzeugs F1 verfügt über eine Videokamera K, welche den Raum vor dem Fahrzeug F1 erfasst. Die Kamera K kann z.B. wie auch der Lidar-Sensor L hinter der Windschutzscheibe des Fahrzeugs F1 installiert sein. Die Kamera K liefert die von ihr erfassten Bilder P an eine in Figur 2 dargestellte Auswerteeinheit A. Die Auswerteeinheit A ermittelt unter Verwendung der Bilder P ein Steuersignal S, welches zur Einstellung der vertikalen Ausrichtung des Lidar-Sensors L verwendet wird. Hierzu ist ein Elektromotor vorgesehen, welcher unter Berücksichtigung des Steuersignals S die vertikale Ausrichtung des Lidar-Sensors L verändern kann.

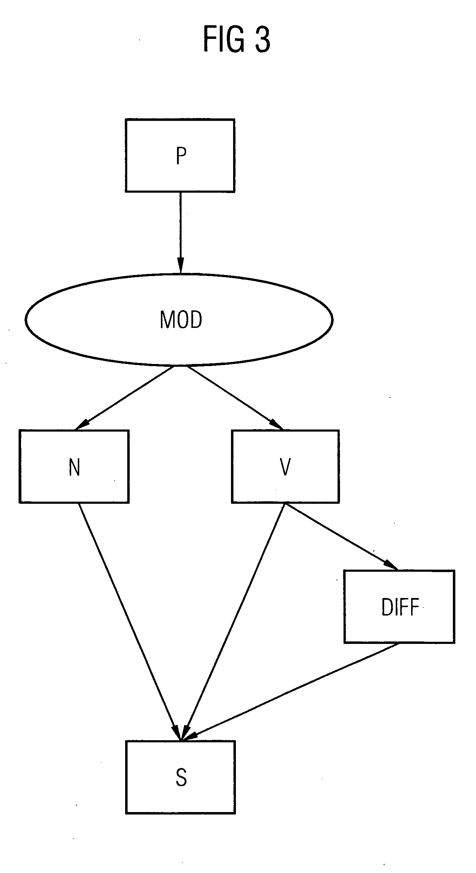

Figur 3 zeigt ein Flussdiagramm zur Veranschaulichung der Ermittlung des Steuersignals S durch die Auswerteeinrichtung A unter Verwendung der Bilder P. Hierzu wird ein Fahrbahnmodell MOD mit Parametern eingesetzt, welche zumindest u.a. dem Nickwinkel des Fahrzeugs F1, sowie der vertikalen und horizontalen Krümmung der Straße entsprechen. Es findet eine Anpassung der Parameter statt, bis der unter Verwendung dieser angepassten Parameter ermittelte Straßenverlauf möglichst gut mit dem von der Kamera aufgenommenen Straßenverlauf übereinstimmt. Zur Überprüfung der Übereinstimmung werden vorzugsweise die Fahrbahnmarkierungen betrachtet; alternativ kann der Rand der Fahrbahn betrachtet werden, wobei letzteres insbesondere bei schneebedeckter Fahrbahn relevant ist. Als Ergebnis werden die genannten Parameter ausgegeben, so dass der Nickwinkel N des Fahrzeugs F1 und der Straßenverlauf V bestimmt wurden. Der Straßenverlauf V gibt hierbei in Abhängigkeit vom Abstand zum Fahrzeug F1 an, wie groß die horizontale und vertikale Krümmung der Straße ist. Eine derartige Ermittlung von Nickwinkel und Fahrbahnverlauf unter Verwendung eines Fahrbahnmodells wird beschrieben z.B. in E.D. Dickmanns, B.D. Mysliwetz: "3-D road and relative egostate estimation", IEEE Transactions on PAMI, 14(2), S. 199-213, Februar 1992.

Zuerst wird die Situation betrachtet, dass die Kamera K kein voranfahrendes Fahrzeug F2 erfasst. Auch in dieser Situation ist eine geeignete vertikale Ausrichtung des Lidar-Sensors L sinnvoll, denn ein gut ausgerichteter Lidar-Sensor L kann ein neu auftauchendes voranfahrendes Fahrzeug F2 schneller erfassen und somit den Abstand zu diesem Fahrzeug bestimmen. Auf diese Weise kann die Fahrerassistenzfunktion ACC rascher genutzt werden, sobald ein sichtbares voranfahrendes Fahrzeug F2 vorhanden ist.

Die Ermittlung des Steuersignals S kann unter Verwendung von lediglich dem Nickwinkel N erfolgen. Der Nickwinkel N beschreibt die Neigung des Fahrzeuges F1 gegen seine Querachse, wobei die Querachse des Fahrzeugs F1 in Figur 1 in die Zeichenebene hinein zeigt. Der Nickwinkel W kann sich ändern z.B. aufgrund der Beladung, der Besetzung der Fahrzeugsitzplätze, durch unterschiedliche Reifendrücke, durch Fahrbahnunebenheiten, Beschleunigen, Abbremsen oder Aufschaukeln eines Fahrzeugs. Das Steuersignal S wird so bestimmt, dass der Nickwinkel N des Fahrzeugs F1 ausgeglichen wird. Dies bedeutet, dass der Lidar-Sensor L in vertikaler Richtung parallel zur Straße ausgerichtet wird. Ist das Fahrzeug F1 beispielsweise aufgrund starker Kofferraum-Beladung nach hinten geneigt, wie in Figur 1 dargestellt, so sollte der Lidar-Sensor L gegenüber dem Zustand ohne Kofferraum-Beladung stärker nach unten ausgerichtet werden.

Außer dem Nickwinkel N kann auch der Straßenverlauf V bei der Ermittlung des Steuersignals S berücksichtigt werden. Eine Ausrichtung des Lidar-Sensors L wie oben erläutert in vertikaler Richtung parallel zur Straße ist insbesondere dann sinnvoll, wenn die vertikale Steigung der Straße konstant ist, wobei dies sowohl auf einen ebenen Straßenverlauf, als auch auf eine positive oder negative Steigung zutrifft. Nimmt die Steigung jedoch vor dem Fahrzeug F1 zu, so ist es vorteilhaft, den Lidar-Sensor L gegenüber der parallelen Ausrichtung etwas stärker nach oben auszurichten; entsprechend ist es für den Fall, dass die Steigung vor dem Fahrzeug F1 abnimmt, günstig, den Lidar-Sensor L gegenüber der parallelen Ausrichtung etwas stärker nach unten auszurichten. Dies lässt sich besonders gut für den Fall illustrieren, dass sich das Fahrzeug F1 auf eine Kuppe oder ein Tal hinbewegt. Dem Straßenverlauf V wird somit entnommen, ob die Steigung der Fahrbahn zu- oder abnimmt, und dementsprechend wird die parallele Ausrichtung des Lidar-Sensors L, welche durch den Ausgleich des Nickwinkels N erreicht wird, abgeändert.

Bislang wurde die Ermittlung des Steuersignals S in Abhängigkeit von den Bildern P ermittelt unter der Voraussetzung, dass von der Kamera K kein vorausfahrendes Fahrzeug F2 erfasst wird. Ist hingegen in den Bildern P ein vorausfahrendes Fahrzeug F2 enthalten, so kann der relative Neigungswinkel DIFF des Fahrzeugs F1 zur Geraden, welche die Fahrzeuge F1 und F2 verbindet, bestimmt werden. Befindet sich der Lidar-Sensor L auf gleicher vertikaler Position wie die Kamera K, so kann das Steuersignal S direkt auf diesem relativen Neigungswinkel DIFF abgeleitet werden. Befindet sich hingegen der Lidar-Sensor L nicht auf gleicher vertikaler Position wie die Kamera K, so kann das Steuersignal S durch Trigonometrie unter Einbeziehung des Abstandes zwischen den Fahrzeugen F1 und F2 berechnet werden. Als Maß für den Abstand kann hierbei eine aus dem von der Kamera K aufgenommenen Bild ermittelte Schätzung dienen. Hierbei ist von Vorteil, dass die Anforderungen an die Genauigkeit der Schätzung gering sind.

Alternativ zur erläuterten Größe DIFF ist es möglich, als Größe DIFF die Differenz der Steigungen der beiden Fahrzeuge F1 und F2 einzusetzen. Die Bestimmung dieser Differenz DIFF erfolgt unter Verwendung des Straßenverlaufs V. Da der Straßenverlauf V ermittelt wurde, und zudem aus den Bildern P bekannt ist, an welcher Stelle des Straßenverlaufs V sich das Fahrzeug F2 befindet, kann die aktuelle vertikale Fahrbahnsteigung, an welcher sich das Fahrzeug F2 befindet, festgestellt werden. Auch die aktuelle vertikale Fahrbahnsteigung des Fahrzeugs F1 kann dem Straßenverlauf V entnommen werden, so dass die Differenz DIFF dieser beiden Werte bestimmbar ist. Sind die beiden Steigungen gleich groß, so z.B. wenn die beiden Fahrzeuge F1 und F2 wie in Figur 1 dargestellt auf ebener Strecke fahren, oder wenn die beiden Fahrzeuge F1 und F2 einen Anstieg mit konstanter Steigung befahren, wird das Steuersignal S so bestimmt, dass der Lidar-Sensor L parallel zur Straße ausgerichtet wird. Ist die aktuelle Steigung des voranfahrenden Fahrzeugs F2 hingegen größer als diejenige des Fahrzeugs F1, so sollte der Lidar-Sensor L höher ausgerichtet werden; umgekehrtes gilt, wenn die aktuelle Steigung des voranfahrenden Fahrzeugs F2 hingegen kleiner als diejenige des Fahrzeugs F1 ist.

Zusätzlich zur Differenz DIFF der Steigungen der beiden Fahrzeuge F1 und F2 wird der Nickwinkel N des Fahrzeugs F1 berücksichtigt. Denn anhand des Straßenverlaufs V kann zwar eine relative Neigung der Fahrzeuge F1 und F2 bestimmt werden, welche sich aus dem Steigungsverlauf der Straße ergibt; die tatsächliche relative Neigung ergibt sich jedoch aus der Differenz DIFF und dem Nickwinkel N. Hierbei kann der Nickwinkel abhängig davon, in welche Richtung das Fahrzeug F1 aufgrund des Nickwinkels N geneigt ist, die Steigungsdifferenz DIFF erhöhen oder reduzieren.

In einer weiteren optionalen Ausgestaltung der Erfindung ist es möglich, den Nickwinkel zusätzlich über einen NickwinkelSensor zu gewinnen. Ein Nickwinkelsensor kann für andere Fahrzeugkomponenten vorgesehen sein, so z.B. für das ESP-System oder für die Scheinwerfer. Die Messergebnisse des Nickwinkelsensors können zusätzlich zu dem anhand des Fahrbahnmodells MOD ermittelten Nickwinkels N eingesetzt werden, indem z.B. ein aus den beiden Werten ermittelter Nickwinkelwert verwendet wird.

## Patentansprüche

1. Auswerteeinheit (A) für ein Fahrerassistenzsystem für ein Fahrzeug (F1), mit
einem Eingang zum Empfangen von von einer Kamera (K) erfassten Bildinformationen (P),
Ermittlungs-Mitteln zum Ermitteln zumindest einer einen Neigungswinkel des Fahrzeugs (F1) beschreibenden Größe (N, DIFF) unter Verwendung der Bildinformationen (P), Bestimmungs-Mitteln zum Bestimmen eines Ausgabesignals (S) unter Verwendung der zumindest einen Größe (N, DIFF), wobei das Ausgabesignal (S) eine vertikale Ausrichtung von von einer Sendeeinheit (L) auszustrahlender elektromagnetischer Strahlung betrifft,
und
einem Ausgang zum Ausgeben des Ausgabesignals (S), **dadurch gekennzeichnet, dass** die Ermittlungs-Mittel derart ausgestaltet sind, dass die zumindest eine Größe (N, DIFF) unter Verwendung von einem anderen in den Bildinformationen (P) abgebildeten Fahrzeug (F2) ermittelt wird.

2. Auswerteeinheit (A) nach Anspruch 1, bei welcher
die Ermittlungs-Mittel derart ausgestaltet sind, dass die zumindest eine Größe (N, DIFF) unter Verwendung von in den Bildinformationen (P) abgebildeten Fahrbahnmarkierungen und/oder Fahrbahnbegrenzungen ermittelt wird.

3. Auswerteeinheit (A) nach Anspruch 2, bei welcher
die Ermittlungs-Mittel derart ausgestaltet sind, dass unter Verwendung der abgebildeten Fahrbahnmarkierungen und/oder Fahrbahnbegrenzungen ein Straßenverlauf (V) ermittelt wird, und unter Verwendung des ermittelten Straßenverlaufs die zumindest eine Größe (N, DIFF) ermittelt wird.

4. Auswerteeinheit (A) nach Anspruch 1, wobei
die zumindest eine Größe (N, DIFF) einen Neigungswinkel (DIFF) des Fahrzeugs (F1) relativ zu dem anderen Fahrzeug (F2) umfasst.

5. Auswerteeinheit (A) nach Anspruch 1 oder 4, wobei
die zumindest eine Größe (N, DIFF) einen Neigungswinkel (DIFF) des Fahrzeugs (F1) relativ zu einer Verbindungslinie zwischen dem Fahrzeug (F1) und dem anderen Fahrzeug (F2) umfasst.

6. Auswerteeinheit (A) nach einem der Ansprüche 1 bis 5, wobei
die zumindest eine Größe (N, DIFF) einen Nickwinkel (N) des Fahrzeugs (F1) umfasst.

7. Auswerteeinheit (A) nach einem der Ansprüche 1 bis 6, wobei
die Sendeeinheit (L) Bestandteil eines Systems zur Abstandsbestimmung ist.

8. Auswerteeinheit (A) nach einem der Ansprüche 1 bis 7, bei welcher
die Ermittlungs-Mittel derart ausgestaltet sind, dass die zumindest eine Größe (N, DIFF) unter Verwendung von von einem Neigungssensor erfassten Informationen (N) ermittelt wird.

9. Fahrerassistenzsystem für ein Fahrzeug (F1), mit
einer Auswerteeinheit (A) nach einem der Ansprüche 1 bis 8, der Kamera (K) und der Sendeeinheit (L).

10. Fahrerassistenzsystem nach Anspruch 9, mit
Mitteln zum Bestimmen des Abstands zu einem anderen Fahrzeug (F2) unter Verwendung der Sendeeinheit (L), und Mitteln zum Regeln des Abstandes zu dem anderen Fahrzeug (F2).

11. Computerprogrammprodukt für ein Fahrerassistenzsystem für ein Fahrzeug (F1), mit
Ermittlungs-Mitteln zum Ermitteln zumindest einer einen Neigungswinkel des Fahrzeugs (F1) beschreibenden Größe (N, DIFF) unter Verwendung von Bildinformationen (P), Bestimmungs-Mitteln zum Bestimmen eines Ausgabesignals (S) unter Verwendung der zumindest einen Größe (N, DIFF), wobei das Ausgabesignal (S) eine vertikale Ausrichtung von von einer Sendeeinheit (L) auszustrahlender elektromagnetischer Strahlung betrifft,
Ausgabe-Mitteln zum Ausgeben des Ausgabesignals (S), **dadurch gekennzeichnet, dass** die Ermittlungs-Mittel derart ausgestaltet sind, dass die zumindest eine Größe (N, DIFF) unter Verwendung von einem anderen in den Bildinformationen (P) abgebildeten Fahrzeug (F2) ermittelt wird.

12. Verfahren zum Betreiben eines Fahrerassistenzsystem für
ein Fahrzeug (F1), wobei
von einer Kamera (K) aufgenommene Bildinformationen (P) empfangen werden,
zumindest eine einen Neigungswinkel des Fahrzeugs (F1) beschreibende Größe (N, DIFF) ermittelt wird unter Verwendung der Bildinformationen (P),
ein Ausgabesignal (S) unter Verwendung der zumindest einen Größe (N, DIFF) bestimmt wird, wobei das Ausgabesignal (S) eine vertikale Ausrichtung von von einer Sendeeinheit (L) auszustrahlender elektromagnetischer Strahlung betrifft, **dadurch gekennzeichnet, dass** die zumindest eine Größe (N, DIFF) unter Verwendung von einem anderen in den Bildinformationen (P) abgebildeten Fahrzeug (F2) ermittelt wird.

## Claims

1. Analysis unit (A) for a driver assistance system for a vehicle (F1), comprising
an input for receiving image information (P) captured by a camera (K),
calculation means for calculating, with reference to the image information (P), at least one variable (N, DIFF) describing an angle of inclination of the vehicle (F1), determining means for determining an output signal (S) with reference to the at least one variable (N, DIFF), wherein the output signal (S) relates to a vertical alignment of electromagnetic radiation that is to be emitted by a transmitter unit (L),
and
an output for outputting the output signal (S), **characterised in that** the calculation means are embodied such that the at least one variable (N, DIFF) is calculated with reference to another vehicle (F2) which is represented in the image information (P).

2. Analysis unit (A) according to claim 1, wherein
the calculation means are embodied such that the at least one variable (N, DIFF) is calculated with reference to roadway markings and/or roadway limits which are represented in the image information (P).

3. Analysis unit (A) according to claim 2, wherein
the calculation means are embodied such that a road course (V) is calculated with reference to the represented roadway markings and/or roadway limits, and the at least one variable (N, DIFF) is calculated with reference to the calculated road course (V).

4. Analysis unit (A) according to claim 1, wherein
the at least one variable (N, DIFF) comprises an angle of inclination (DIFF) of the vehicle (F1) relative to the other vehicle (F2).

5. Analysis unit (A) according to claim 1 or 4, wherein
the at least one variable (N, DIFF) comprises an angle of inclination (DIFF) of the vehicle (F1) relative to a connecting line between the vehicle (F1) and the other vehicle (F2).

6. Analysis unit (A) according to one of claims 1 to 5,
wherein
the at least one variable (N, DIFF) comprises a pitch angle (N) of the vehicle (F1).

7. Analysis unit (A) according to one of claims 1 to 6,
wherein
the transmitter unit (L) is part of a system for determining distance.

8. Analysis unit (A) according to one of claims 1 to 7,
wherein
the calculation means are embodied such that the at least one variable (N, DIFF) is calculated with reference to information (N) captured by a tilt sensor.

9. Driver assistance system for a vehicle (F1), comprising an analysis unit (A) according to one of claims 1 to 8, the camera (K) and the transmitter unit (L).

10. Driver assistance system according to claim 9, comprising means for determining the distance from another vehicle (F2) with the aid of the transmitter unit (L), and means for controlling the distance from the other vehicle (F2).

11. Computer program product for a driver assistance system for a vehicle (F1), comprising
calculation means for calculating, with reference to image information (P), at least one variable (N, DIFF) describing an angle of inclination of the vehicle (F1), determining means for determining an output signal (S) with reference to the at least one variable (N, DIFF), wherein the output signal (S) relates to a vertical alignment of electromagnetic radiation that is to be emitted by a transmitter unit (L),
output means for outputting the output signal (S), **characterised in that** the calculation means are embodied such that the at least one variable (N, DIFF) is calculated with reference to another vehicle (F2) which is represented in the image information (P).

12. Method for operating a driver assistance system for a vehicle (F1), wherein
image information (P) recorded by a camera (K) is received,
at least one variable (N, DIFF) describing an angle of inclination of the vehicle (F1) is calculated with reference to the image information (P),
an output signal (S) is determined with reference to the at least one variable (N, DIFF), wherein the output signal (S) relates to a vertical alignment of electromagnetic radiation that is to be emitted by a transmitter unit (L), **characterised in that** the at least one variable (N, DIFF) is calculated with reference to another vehicle (F2) which is represented in the image information (P).

## Revendications

1. Unité d'analyse (A) pour un système d'assistance de conducteur pour un véhicule (F1), comprenant
une entrée pour la réception d'informations en images (P) enregistrées par une caméra (K),
des moyens de détermination pour déterminer au moins une grandeur (N, DIFF) décrivant un angle d'inclinaison du véhicule (F1) en utilisant les informations en images (P),
des moyens de détermination pour déterminer un signal de sortie (S) en utilisant la au moins une grandeur (N, DIFF), le signal de sortie (S) concernant une orientation verticale de rayonnement électromagnétique à diffuser par une unité d'émission (L),
et
une sortie pour la sortie du signal de sortie (S), **caractérisée en ce que** les moyens de détermination sont conçus de telle sorte que la au moins une grandeur (N, DIFF) soit déterminée en utilisant un autre véhicule (F2) que celui représenté dans les informations en images (P).

2. Unité d'analyse (A) selon la revendication 1, sur laquelle les moyens de détermination sont conçus de telle sorte que la au moins une grandeur (N, DIFF) soit déterminée en utilisant des repères de chaussée et/ou des délimitations de chaussée représentés dans les informations en images (P).

3. Unité d'analyse (A) selon la revendication 2, sur laquelle les moyens de détermination sont conçus de telle sorte qu'un tracé de route (V) soit déterminé en utilisant les repères de chaussée et/ou les délimitations de chaussée représentés, et la au moins une grandeur (N, DIFF) soit déterminée en utilisant le tracé de route déterminé.

4. Unité d'analyse (A) selon la revendication 1, sur laquelle la au moins une grandeur (N, DIFF) comprend un angle d'inclinaison (DIFF) du véhicule (F1) par rapport à l'autre véhicule (F2).

5. Unité d'analyse (A) selon la revendication 1 ou 4, sur laquelle la au moins une grandeur (N, DIFF) comprend un angle d'inclinaison (DIFF) du véhicule (F1) par rapport à une ligne de liaison entre le véhicule (F1) et l'autre véhicule (F2).

6. Unité d'analyse (A) selon l'une quelconque des revendications 1 à 5, sur laquelle
la au moins une grandeur (N, DIFF) comprend un angle de tangage (N) du véhicule (F1).

7. Unité d'analyse (A) selon l'une quelconque des revendications 1 à 6, sur laquelle
l'unité d'émission (L) fait partie d'un système pour la détermination de la distance.

8. Unité d'analyse (A) selon l'une quelconque des revendications 1 à 7, sur laquelle
les moyens de détermination sont conçus de telle sorte que la au moins une grandeur (N, DIFF) soit déterminée en utilisant des informations (N) enregistrées par un capteur d'inclinaison.

9. Système d'assistance de conducteur pour un véhicule (F1), comprenant une unité d'analyse (A) selon l'une quelconque des revendications 1 à 8, la caméra (K) et l'unité d'émission (L).

10. Système d'assistance de conducteur selon la revendication 9, comprenant des moyens pour déterminer la distance par rapport à un autre véhicule (F2) en utilisant l'unité d'émission (L) et des moyens pour régler la distance par rapport à l'autre véhicule (F2).

11. Programme informatique pour un système d'assistance de conducteur pour un véhicule (F1), comprenant
des moyens de détermination pour déterminer au moins une grandeur (N, DIFF) décrivant un angle d'inclinaison du véhicule (F1) en utilisant des informations en images (P), des moyens de détermination pour déterminer un signal de sortie (S) en utilisant la au moins une grandeur (N, DIFF), le signal de sortie (S) concernant une orientation verticale de rayonnement électromagnétique à diffuser par une unité d'émission (L),
des moyens de sortie pour sortir le signal de sortie (S),
**caractérisé en ce que** les moyens de détermination sont conçus de telle sorte que la au moins une grandeur (N, DIFF) soit déterminée en utilisant un véhicule (F2) autre que celui représenté dans les informations en images (P).

12. Procédé pour exploiter un système d'assistance de conducteur pour un véhicule (F1), avec lequel
des informations en images (P) prises par une caméra (K) sont reçues,
au moins une grandeur (N, DIFF) décrivant un angle d'inclinaison du véhicule (F1) est déterminée en utilisant les informations en images (P),
un signal de sortie (S) est déterminé en utilisant la au moins une grandeur (N, DIFF), le signal de sortie (S) concernant une orientation verticale de rayonnement électromagnétique à diffuser par une unité d'émission (L), **caractérisé en ce que** la au moins une grandeur (N, DIFF) est déterminée en utilisant un véhicule (F2) autre que celui représenté dans les informations en images (P).
